# EUROPÄISCHE PATENTSCHRIFT

(11) **EP 1 394 365 B1**
(45) Veröffentlichungstag und Bekanntmachung des Hinweises auf die Patenterteilung: **25.10.2006**
(21) Anmeldenummer: 02019179.7
(22) Anmeldetag: 02.09.2002
(51) Int. Cl.: F01D 25/18, F16J 15/00, F02C 6/12

(54) **Wellendichtung für Turbolader**
Turbocharger shaft sealing
Système d'étanchéité d'arbre pour turbosoufflante

(43) Veröffentlichungstag der Anmeldung: 03.03.2004
(73) Patentinhaber: BorgWarner Inc., Auburn Hills, MI 48326-2872 (US)
(72) Erfinder: Frankenstein, Dirk, 67550 Worms (DE)
(74) Vertreter: Kügele, Bernhard

(56) Entgegenhaltungen:
- EP-A- 0 357 246
- CH-A- 266 731
- DE-A- 3 621 600
- US-A- 3 574 478
- US-A- 4 196 910
- US-A- 4 343 591
- US-A- 5 028 205

## Beschreibung

### Gebiet der Erfindung

Die Erfindung bezieht sich auf einen Turbolader mit einer Rotorwelle, die eine Rotationsachse definiert. Ein Ende der Rotorwelle ragt in ein Turbinengehäuse mit mindestens einem Zufuhrkanal für Abgas, in welchem mindestens ein Turbinenrotor an dieser Rotorwelle befestigt und somit drehbar gelagert ist, und dessen Peripherie das Abgas zuführbar ist. Ferner ist ein Kompressorgehäuse mit mindestens einem Zufuhrkanal für Luft vorgesehen, in welches das andere Ende der Rotorwelle ragt. An diesem anderen Ende der Rotorwelle ist wenigstens ein Kompressorrotor befestigt, und dessen Peripherie wird die Luft zugeführt. Eine Lageranordnung für die Rotorwelle ist mindestens im Bereiche des Kompressorrotors vorgesehen, welche Lageranordnung eine Dichtungseinrichtung aufweist.

### Hintergrund der Erfindung

Bei Turboladern dieser Art kommt es im Verlaufe des Betriebes zu einer Erscheinung, die man "Blowby" nennt. Dabei kommt es bei höherem Abgasdruck, d.h. bei höheren Umdrehungszahlen, zu einer Tendenz, daß das Abgas aus dem Turbinengehäuse über unvermeidliche Leckstellen in das Lagergehäuse strömt. Ebenso strömt bei höheren Drehzahlen und höherem Ladedruck angesaugte Luft aus dem Verdichtergehäuse über die verdichterseitige Dichtung, z.B. mittels eines Kolbenringes, ins Lagergehäuse.

Weiterhin kann es bei niedrigen Ladedrücken und hohen Drehzahlen dazu kommen, daß ölhaltiges Luft-/Abgasgemisch aus dem Lagergehäuse in Richtung Verdichtergehäuse strömt und dann dem Verbrennungsmotor zugeführt wird, womit sich das Emissionsverhalten verschlechtert.

### Kurzfassung der Erfindung

Der Erfindung liegt die Aufgabe zugrunde, den oben beschriebenen "Blow-by" und beispielsweise den Zutritt verdichteter Ansaugluft von der Kompressorseite her, zu verringern oder zu unterbinden. Der Erfindung liegt dabei die Erkenntnis zugrunde, daß der Eintrag an "Blowby" in das Lagergehäuse vor allem von der Kompressorseite her erfolgt, obwohl das Lagergehäuse im allgemeinen bereits eine herkömmliche Abdichtung, z.B. mittels Kolbenring aufweist.

Erfindungsgemäß wird die genannte Aufgabe wie im kennzeichnenden Teil des Anspruch 1 angegeben gelöst.

### Kurzbeschreibung der Zeichnungen

Weitere Einzelheiten der Erfindung ergeben sich an Hand der nachfolgenden Beschreibung eines in der Zeichnung schematisch dargestellten bevorzugten Ausführungsbeispieles. Es zeigen:
Fig. 1 einen Axialschnitt durch die wesentlichen Teile eines Turboladers; und
Fig. 2 eine vergrößerte Darstellung des Details X der Fig. 1.

### Detaillierte Beschreibung der Zeichnungen

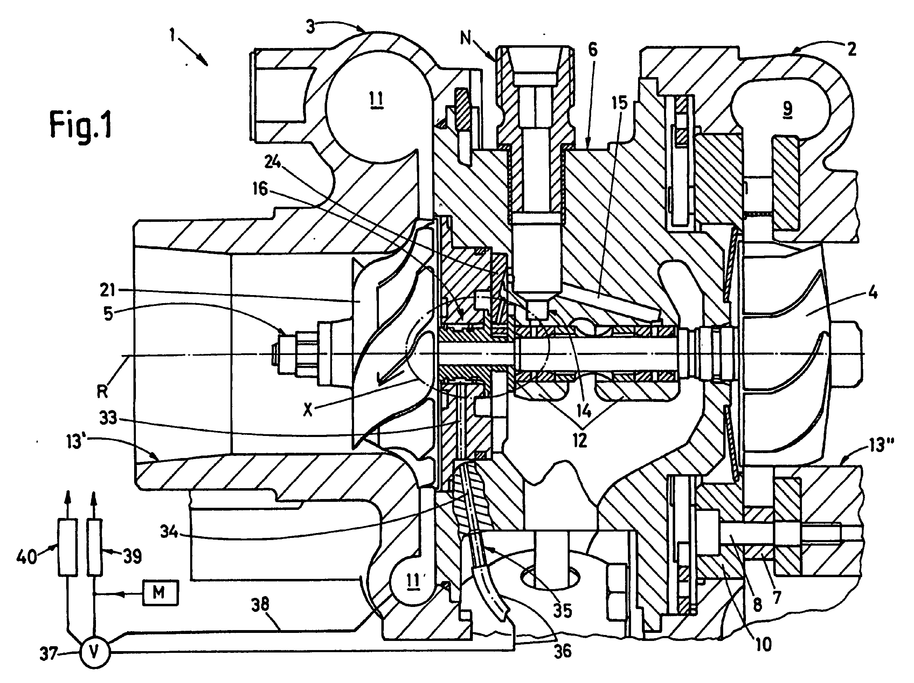

Gemäß Fig. 1 weist ein Turbolader 1 (nur der Mittelteil ist dargestellt, wogegen Teile an de linken und rechten Seite abgerissen sind) in üblicher Weise einen Turbinengehäuseteil 2 und einen damit verbundenen Kompressorgehäuseteil 3 auf, die entlang einer Rotationsachse R angeordnet sind. Der Turbinengehäuseteil 2 im Schnitt zeigt den an der Achse R gelegenen Turbinenrotor 4, der am einen Ende einer Rotorwelle 5 befestigt ist, welche in einem Gehäusemittelteil 6 gelagert ist. Das Turbinengehäuse 2 weist einen etwa ringförmigen Zufuhrkanal 9 für Abgas auf, um dem Turbinenrotor 4 Abgas aus einem Verbrennungsmotor zuzuführen. Die Zufuhr erfolgt bei der dargestellten Ausführung über die Schaufeln 7 eines an sich bekannten (und daher hier nicht im einzelnen beschriebenen) Leitgitters variabler Geometrie, die über in einem Schaufellagerring 10 gelagerte Verstellwellen 8 hinsichtlich ihrer Lage (mehr radial zum Rotor 4 oder mehr tangential) einstellbar sind. Es versteht sich, daß auch mehr als ein Zufuhrkanal 9 vorgesehen sein kann, insbesondere wenn etwa mehrere Turbinenrotoren an der Welle 5 befestigt sein sollten.

Auf diese Weise wird über den Turbinenrotor 4 ein auf derselben Rotorwelle 5, und zwar an deren anderen Ende, sitzender Kompressorrotor 21 angetrieben. Dieser Kompressorrotor 21 saugt Luft über einen ihn umgebenden Zufuhrkanal 11 an (der etwa gleich wie der Zufuhrkanal 9 ausgebildet ist und den zugehörigen Rotor etwa ringförmig umgibt), verdichtet sie und bläst sie durch einen Axialstutzen 13' aus. In ähnlicher Weise besitzt auch das Turbinengehäuse 2 einen Axialstutzen 13".

Die Rotorwelle 5 liegt in einer Lageranordnung 12, der Überdruck zur Schmierung über eine Bohrungen 14, 15 von einem Nippel N aus zugeführt wird. Zwar wirkt dieser Überdruck teilweise auch gegen den Druck der vom Verdichter komprimierten Luft, doch bei hohen Tourenzahlen und Ladedrücken besteht die Tendenz, in den Mittelteil 6 zu strömen.

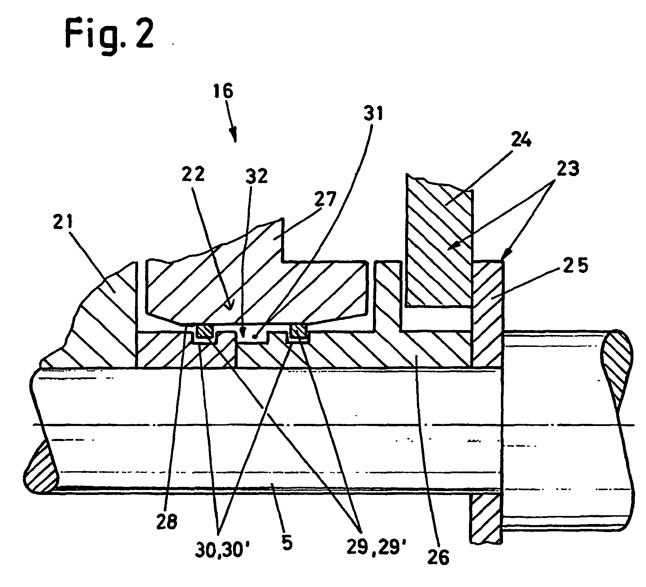

Um dies zu verhindern, ist die erfindungsgemäße Ausführung mit einer Lageranordnung 16 derart vorgesehen, wie sie aus dem Vergleich der Fig. 1 und 2 ersichtlich und nachstehend beschrieben wird.

Gemäß Fig. 2 ist die Lageranordnung 16 (vgl. Fig. 1) von einer Gehäusewand und einem Axiallager 23 gebildet. Zur axialen Lagerung greift ein ortsfester Lagerteil 24 (vgl. Fig. 1) in eine von zwei mit der Rotorwelle 5 verbundene Drehteile 25, 26 ein. Es ist nicht wesentlich, ob nun diese Teile 25, 26 separate Teile sind oder als umlaufender Bestandteil der, beispielsweise entsprechend gedrehten oder gefrästen, Rotorwelle 5 ausgebildet sind. Dies gilt auch für die die später besprochenen Nuten 30, 30' aufnehmenden Teile.

An die Innenwand 28 eines Gehäuseteils 27 bzw. Dichtungsbereiches 22 sind in axialem Abstand voneinander (mindestens) zwei Kolbenringe 29, 29' angeordnet, die jeweils in eine zugehörige Nut 30, 30' eines mit der Welle 5 verbundenen Drehteiles oder in der Welle 5 selbst eingreifen und so eine Art von Labyrinthdichtung bilden. Es versteht sich, daß im Rahmen der Erfindung auch andere Formen von Dichtungen Anwendung finden können, daß aber diese in jedem Falle in einem axialen Abstand voneinander liegen, wie unten noch im einzelnen ausgeführt wird.

Denn zwischen diesen beiden Dichtungsanordnungen 29, 30 verbleibt ein Raum 31, der vorzugsweise durch eine Nut 32, insbesondere in einem an der Welle 5 befestigten mitdrehenden Teil oder an der Welle 5 selbst, erweitert ist. Die Erweiterung könnte sich nur über einen Teil des Umfanges der Welle 5 bzw. des damit verbundenen Drehteils erstrecken, ist aber bevorzugt als Ringnut ausgebildet, so daß ein mit ihr kommunizierender Sauganschluß (Fig. 1) in Form einer vertikalen Bohrung 33 und einer daran anschließenden Schrägbohrung in diesem Raum 31 (Fig. 2) befindliches Gas samt allenfalls vorhandenen Verunreinigungen absaugen kann. Dieses Gas wird aus der Schrägbohrung 34 zu einem Schlauchnippel 35 geführt, wo ein Schlauch 36 zu einer Vakuumquelle führt.

Die Vakuumquelle kann verschiedener Art sein. In Fig. 1 sind mehrere Möglichkeiten über ein 3-Wege-Ventil 37 ansteuerbar, doch mag es für gewisse Anwendungen genügen, entweder nur eine der Vakuumquellen zu benutzen (dann kann das Ventil 37 wegfallen) oder nur zwei davon. Die Umschaltung kann manuell oder auch automatisch, z.B. in Abhängigkeit von der Tourenzahl der Rotorwelle 5 oder vom Abgas- und/oder Kompressionsdruck oder von der Betriebsart eines in Fig. 1 nur schematisch angedeuteten Verbrennungsmotors M.

Auf diese Weise kann über das 3-Wege-Ventil 37 die Saugseite des Kompressorrotors 21 selbst über eine Leitung 38 angesteuert werden; oder alternativ die Abgasleitung 39 des Motors M, bei der beispielsweise die Abgase des Motors M - soweit sie nicht über den Turbolader laufen oder erst nach ihrem Austritt aus dem Axialstutzen 13" - als Injektorpumpe benutzt werden, um einen negativen Druck in der Schlauchleitung 36 zu erzeugen; oder alternativ ein Ölabscheider 40. Welche der Vakuumquellen verwendet wird, hängt von der Anwendung und von anderen, oben angedeuteten Faktoren ab. Es wäre sogar denkbar, ein Ventil 37 zu verwenden, daß zwei der gezeigten Vakuumquellen miteinander mehr oder weniger kombiniert (ähnlich einer Mischbatterie im Badezimmer). Beispielsweise kann der Ölabscheider 40 in Betriebszuständen herangezogen werden, wenn ein größerer Ölanteil in dem zum Kompressorrotor 21 strömenden Gas zu erwarten ist, wogegen bei Betriebszuständen mit wenig Verschmutzung im Gas die Leitung 38 angewählt werden kann.

Im Rahmen der Erfindung sind zahlreiche Modifikationen möglich; beispielsweise braucht die Erweiterung 32 nicht in der Welle 5 vorgesehen sein, sondern könnte auch (zusätzlich oder alternativ) in der Innenwand 28 des Dichtungsbereiches 22 vorgesehen werden, obwohl dies weniger bevorzugt ist.

## Patentansprüche

1. Turbolader (1), der folgendes aufweist:
eine Rotorwelle (5), die eine Rotationsachse (R) definiert,
ein Turbinengehäuse (2) mit mindestens einem Zufuhrkanal (9) für Abgas, in welches ein Ende der Rotorwelle (5) ragt, und in welchem
mindestens ein Turbinenrotor (4) an dieser Rotorwelle (5) befestigt und so drehbar gelagert ist, und dessen Peripherie das Abgas zuführbar ist,
ein Kompressorgehäuse (3) mit mindestens einem Zufuhrkanal (11) für Luft, in welches das andere Ende der Rotorwelle (5) ragt, an dem
wenigstens ein Kompressorrotor (21) befestigt ist und dessen Peripherie die Luft zufübrbar ist, sowie mit
einer Lageranordnung (16) für die Rotorwelle im Bereiche des Kompressorrotors (21), welche Lageranordnung (16) eine Dichtungseinrichtung (29, 30, 29', 30') aufweist, wobei
die Dichtungseinrichtung (29, 30, 29', 30') zusätzlich zu einer ersten Dichtungsanordnung (29, 30) eine im axialen Abstand liegende zweite Dichtungsanordnung (29', 30') aufweist, **dadurch gekennzeichnet, dass** eine in den Raum (31) zwischen den beiden Dichtungsanordnungen (29, 30, 29', 30') führende und mit einer Vakuumquelle (11, 39, 40) verbindbare Saugbohrung (33, 34) vorgesehen ist und dass die Vakuumquelle von der Saugseite (11) des Kompressorrotors (21) selbst gebildet ist.

2. Turbolader (1) nach Anspruch 1, **dadurch gekennzeichnet, daß** der Raum (31) zwischen den beiden Dichtungsanordnungen eine Erweiterung (32) aufweist.

3. Turbolader (1) nach Anspruch 2, **dadurch gekennzeichnet, daß** die Erweiterung (32) als ringförmig um die Rotationsachse (R) sich erstreckende Kammer ausgebildet ist.

4. Turbolader (1) nach einem der vorhergehenden Ansprüche, **dadurch gekennzeichnet, daß** die Erweiterung (32) als Nut in einem Umlaufteil der Rotorwelle (5) vorgesehen ist

5. Turbolader (1) nach einem der vorhergehenden Ansprüche, **dadurch gekennzeichnet, daß** mindestens eine der beiden Dichtungsanordnungen (29, 30, 29', 30') von einem in eine gegenüberliegende Ringnut (30, 30') eingreifenden Kolbenring (29, 29') gebildet ist.

6. Turbolader (1) nach Anspruch 5, **dadurch gekennzeichnet, daß** der Kolbenring (29, 29') an der Innenwand (28) der Lageranordnung (16) angebracht ist und in eine Ringnut (30, 30') in einem mit der Rotorwelle (5) mitdrehenden Teil (26) eingreift.

7. Turbolader (1) nach einem der vorhergehenden Ansprüche, **dadurch gekennzeichnet, daß** die Vakuumquelle einen nachgeschalteten Ölabscheider (40) umfaßt.

## Claims

1. A turbocharger (1) comprising
a rotor shaft (5) defining an axis of rotation (R),
a turbine housing (2) including at least one gas supply channel (9) for exhaust gas, one end of said rotor shaft (5) projecting into said turbine housing ;
at least one turbine rotor (4), mounted on said rotor shaft (5) so as to be rotatable, said exhaust gas being supplied to the periphery thereof,
a compressor housing (3) including at least one air supply channel (11), a second end of said rotor shaft means (5) projecting into said compressor housing means ;
at least one compressor rotor (21) mounted on said rotor shaft means (5), air being supplied to the periphery thereof, as well as
a bearing means (16) for said rotor shaft means being arranged in the region of said compressor rotor (21), said bearing means including a sealing means (29, 30, 29', 30'), wherein said sealing means (29, 30, 29', 30') comprises further a first sealing device (29, 30), and a second sealing device (29', 30'), axially spaced from each other,
**characterized in that**
a suction channel (33, 34) being provided, connected to a vacuum source (11, 39, 40)
and leading into an intermediate space (31) between said sealing devices (29, 30, 29', 30'), said vacuum sources being formed by the suction side of the compressor rotor (21).

2. Turbocharger (1) as claimed in claim 1, wherein said space (31) between said sealing devices comprises an enlargement (32).

3. Turbocharger (1) as claimed in claim 2, wherein said enlargement (32) forms an annular chamber extending around said axis of rotation (R).

4. Turbocharger (1) as claimed in anyone of the precending claims, wherein said enlargement (32) is formed as a groove within a rotating part of said rotor shaft means.

5. Turbocharger (1) as claimed in anyone of the preceding claims, wherein at least one of said first and second sealing means (29, 30, 29', 30') is formed by a piston ring (29, 29') engaging into opposing grooves(30, 30').

6. Turbocharger as claimed in claim 5, wherein said piston ring (29, 29') is secured to an inner wall (28) of said bearing means (16) and engages into an annular groove (30, 30') within a part (26) rotating together with said rotor shaft (5).

7. Turbocharger as claimed in anyone of the preceding claims, wherein said vacuum source comprises an oil separator on the downstream side.

## Revendications

1. Turbocompresseur (1) comprenant :
un arbre rotor (5) définissant un axe de rotation (R),
un logement de turbine (2) incluant au moins un canal d'alimentation de gaz (9) pour un gaz d'échappement, une extrémité dudit arbre rotor (5) saillant dans ledit logement de turbine ;
au moins un rotor de turbine (4), monté sur ledit arbre rotor (5) de manière à pouvoir être en rotation, ledit gaz d'échappement étant alimenté à la périphérie de celui-ci,
un carter de compresseur (3) incluant au moins un canal d'alimentation d'air (11), une seconde extrémité dudit moyen d'arbre rotor (5) saillant dans ledit moyen de carter de compresseur ;
au moins un rotor de compresseur (21) monté sur ledit moyen d'arbre rotor (5), de l'air étant alimenté à la périphérie de celui-ci, de même que
un moyen de support (16) pour ledit moyen d'arbre rotor étant agencé dans la région dudit rotor de compresseur (21), ledit moyen de support incluant un moyen d'étanchéité (29, 30, 29', 30'), dans lequel ledit moyen d'étanchéité (29, 30, 29', 30') comprend en plus un premier dispositif d'étanchéité (29, 30), et un second dispositif d'étanchéité (29', 30'), axialement espacés l'un de l'autre,
**caractérisé en ce que**
un canal d'aspiration (33, 34) est prévu, connecté à une source de vide (11, 39, 40),
et menant à un espace intermédiaire (31) entre lesdits dispositifs d'étanchéité (29, 30, 29', 30'), lesdites sources de vide étant formées par le côté d'aspiration du rotor de compresseur (21).

2. Turbocompresseur (1) selon la revendication 1, dans lequel ledit espace (31) entre lesdits dispositifs d'étanchéité comprend un élargissement (32).

3. Turbocompresseur (1) selon la revendication 2, dans lequel ledit élargissement (32) forme une chambre annulaire s'étendant autour dudit axe de rotation (R).

4. Turbocompresseur (1) selon l'une quelconque des revendications précédentes, dans lequel ledit élargissement (32) est formé en tant que rainure dans une partie de rotation dudit moyen d'arbre de rotor.

5. Turbocompresseur (1) selon l'une quelconque des revendications précédentes, dans lequel au moins l'un desdits premier et second moyens d'étanchéité (29, 30, 29', 30') est formé par un segment de piston (29, 29') s'engageant dans des rainures opposées (30, 30')

6. Turbocompresseur (1) selon la revendication 5, dans lequel ledit segment de piston (29, 29') est attaché à une paroi interne (28) dudit moyen de support (16) et s'engage dans une rainure annulaire (30, 30') dans une partie (26) tournant ensemble avec ledit arbre rotor (5).

7. Turbocompresseur (1) selon l'une quelconque des revendications précédentes, dans lequel ladite source de vide comprend un séparateur d'huile du côté en aval.
